# EUROPEAN PATENT SPECIFICATION

(11) **EP 2 062 020 B1**
(45) Date of publication and mention of the grant of the patent: **22.06.2011**
(21) Application number: 07859077.5
(22) Date of filing: 17.12.2007
(51) Int. Cl.: G01K 13/02

(54) **EXHAUST GAS TEMPERATURE ANALYSIS APPARATUS, METHOD, AND PROGRAM**
ABGASTEMPERATUR-ANALYSEGERÄT SOWIE VERFAHREN UND PROGRAMM DAFÜR
APPAREIL ET PROCÉDÉ D'ANALYSE DE LA TEMPÉRATURE D'UN GAZ D'ÉCHAPPEMENT, ET PROGRAMME D'ANALYSE THERMIQUE

(30) Priority: 18.12.2006 JP 2006340590
(43) Date of publication of application: 27.05.2009
(73) Proprietor: Toyota Jidosha Kabushiki Kaisha, Toyota-shi 471-8571 (JP); Mitsubishi Heavy Industries, Ltd., Tokyo 108-8215 (JP)
(72) Inventor: YAMAKAGE, Masahiro, Aichi-ken 471-8571 (JP); MUTA, Kenji, Aichi-ken 471-8571 (JP); DEGUCHI, Yoshihiro, Tokyo 108-8215 (JP); FUKUDA, Norihiro, Tokyo 108-8215 (JP); ASAMI, Shinichiro, Tokyo 108-8215 (JP)
(74) Representative: Kuhnen & Wacker
(86) International application number: PCT/IB2007/003952
(87) International publication number: WO 2008/075178

(56) References cited:
- DE-A1- 19 832 837
- DE-B3-102005 036 525
- US-B1- 6 244 743

## Description

### BACKGROUND OF THE INVENTION

### 1. Field of the Invention

The present invention relates to an exhaust gas temperature analysis apparatus, analysis method, and analysis program.

### 2. Description of the Related Art

A conventional apparatus passes a laser beam through an exhaust gas and determines the concentration and temperature of specific gas components from the transmittance of the specific component (refer to, for example, Japanese Patent Application Publication No. 2004-117259 (JP-A-2004=117259)).

In particular, JP-A-2004-117259 describes processing units, such as a personal computer mounted within an automobile that analyze the concentration of gas components contained in, and the temperature of, the engine exhaust gas.

In the technology described in JP-A-2004-117259, the signal strength ratio I/Iₒ of the intensity Iₒ of light of a reference laser beam with the intensity I of transmitted light of a measurement laser beam is measured. When calculating the concentration of a gas component based on this signal strength ratio, it is necessary to determine the absorbance of the gas component. In calculating the gas component concentration based on the signal strength ratio, therefore, it is first necessary to analyze the temperature of the gas component.

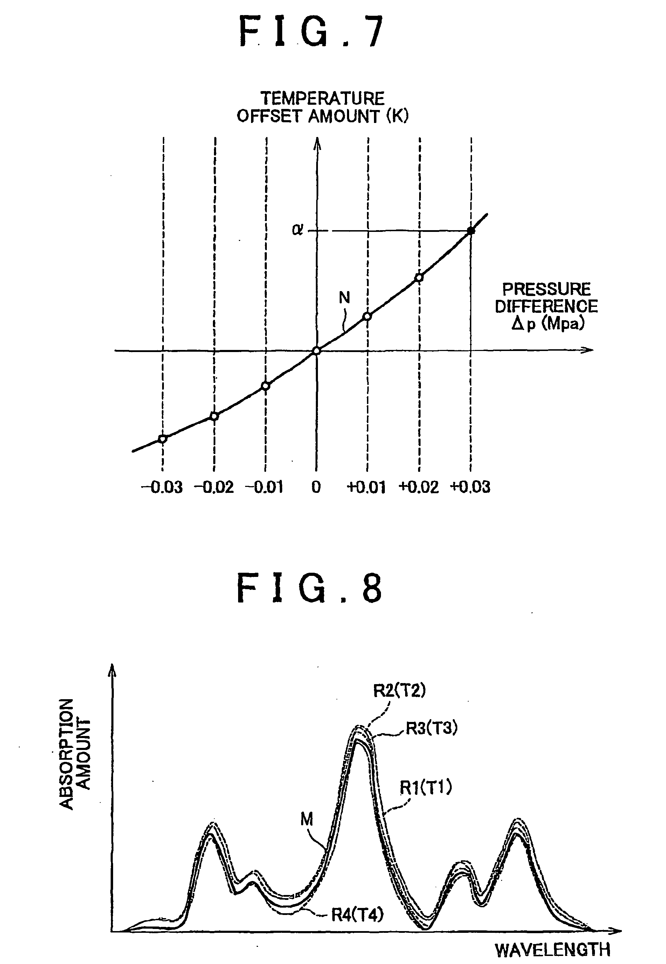

In conventional temperature analysis of a gas component, for example as shown in FIG. 8, the measured spectrum M of H₂O is measured, and a theoretical spectrum R1, which is the closest to the measured spectrum M is determined, that is, fitting is performed to determine the temperature. The theoretical spectrum R1 is a spectrum that is uniquely determined by the temperature. For example, at a temperature T I the theoretical spectrum is R1, and at a temperature T2 the theoretical spectrum is R2.

In the conventional method of fitting, from the theoretical spectra R1, R2, and so on, the absorption amount of various theoretical spectra is integrated to calculate and determine the theoretical spectrum that is closest to the measured spectrum M, and, in some cases, a determination is made using a calculation by taking into consideration the level of coincidence of the peak wavelengths.

With regard to the calculation, if it is desired to determine the temperature to the nearest degree Kelvin within the range of 1000K (Kelvin), for example, it is necessary to perform fitting among 1000 different spectra to determine the one that is closest to the measured spectrum M.

The time required to perform these calculations presents an obstacle to performing the gas component analysis quickly and accurately, and there is a need to reduce the calculation time. Also, when performing calculations with a high resolution using conventional technology, for example, in the case of determining the temperature in units of 0.1K, because the number of theoretical spectra for fitting increases even more, it becomes an even more serious problem to reduce the calculation time.

Other prior art related to the determination of temperature of exhaust gas, related to the creation of an absorption coefficient database, and related to temperature determination by spectral analysis are disclosed in DE102005036525 B3, DE19832837 A1, and US6244743 B1

### SUMMARY OF THE INVENTION

The present invention provides an approach for reducing the calculation time for calculating a temperature by fitting a measured spectrum to a theoretical spectrum

A first aspect of the present invention relates to a method for analyzing the temperature of the exhaust gas. The method fits a measured spectrum of a measured gas to theoretical spectra predefined for a series of temperatures and pressures wherein the temperature of the measured gas is defined as that of the theoretical spectrum that most closely fits the measured spectrum, and calculates an approximate temperature at least one time by fitting the measured spectrum to a portion of theoretical spectra defined in association with a first temperature range using a temperature calculated in an immediately preceding temperature analysis as a reference, and determining a calculated temperature by fitting the measured spectrum to all the theoretical spectra over a second temperature range that is narrower than the first temperature range, using the approximate temperature as a reference.

According to the first aspect of the present invention, if there is a difference between a pressure of the theoretical spectra referred to in the fitting and a pressure of the measured gas, the method may perform a discrete-calculation correction on the calculated temperature with respect to the pressure difference to calculate a corrected temperature.

In the first aspect, the temperature calculated in the immediately preceding temperature analysis may be one of an approximate temperature determined in an immediately preceding temperature analysis, a calculated temperature determined in an immediately preceding temperature analysis, or a corrected temperature determined in an immediately preceding temperature analysis.

A second aspect of the present invention is an exhaust gas temperature analysis apparatus that fits the measured spectrum of the measured gas to all theoretical spectra defined for a series of temperatures and pressures, wherein the temperature of the measured gas is defined as that of the theoretical spectrum that most closely fits the measured spectrum. The apparatus of the second aspect includes: a first fitting device that at least one time fits the measured spectrum to a portion of the theoretical spectra defined in association with a first temperature range having a temperature determined in an immediately preceding time as a reference; and a second fitting device that fits the measured spectrum to all theoretical spectra defined in association with a second temperature range that is narrower than the first temperature range to determine a calculated temperature.

The second aspect of the present invention may further include a discrete-calculation correction device that performs a discrete-calculation correction on the calculated temperature with respect to the pressure difference to determine the corrected temperature when there is a pressure difference between the pressure in a theoretical spectrum referenced in the fitting and the measured pressure.

In the second aspect of the present invention, the temperature determined in the immediately preceding temperature analysis may be one of an approximate temperature determined in the immediately preceding temperature analysis, a calculated temperature determined in the immediately preceding temperature analysis, or a corrected temperature determined in the immediately preceding temperature analysis.

A third aspect of the present invention is an exhaust gas temperature analysis program that may be executed by a computer to fit a measured spectrum of a measured gas to theoretical spectra that are pre-defined for a series of temperatures and pressures, wherein the temperature of the measured gas is defined as that of the theoretical spectrum that most closely fits the measured spectrums. The program has instructions for calculating an approximate temperature at least once by fitting the measured spectrum to a portion of the theoretical spectra defined in association with a first temperature range using a temperature determined in the immediately preceding temperature analysis as a reference, and determining a calculated temperature by fitting the measured spectrum to all the theoretical spectra defined in association with a second temperature range that is narrower than the first temperature range, using the approximate temperature as a reference.

A program of the third aspect may include instructions for performing a discrete-calculation correction on the calculated temperature with respect to a pressure difference when there is a difference between the pressure in a theoretical spectrum referenced in the fitting and the measured pressure of the measured gas to determine a corrected temperature.

In the program of the third aspect, the temperature determined in the immediately preceding temperature analysis may be one of an approximate temperature determined in an immediately preceding temperature analysis, a calculated temperature determined in an immediately preceding temperature analysis, or a corrected temperature determined in an immediately preceding temperature analysis.

According to the first, second, and third aspects of the present invention, it is possible to reduce the number of times to fit the measured spectrum to the theoretical spectra and to more quickly perform gas component analysis by reducing the calculation time, that is, by enabling real-time temperature analysis. Also, by enabling the collection of a large amount of data, it is possible to perform analysis with higher accuracy.

According to the above-described aspects of the present invention, by performing discrete-calculation correction, it is possible to eliminate the influence of pressure difference. Thus, data may be obtained with higher reliability.

According to the above-described aspects of the present invention, when it is desired to obtain information regarding the approximate temperature in a short period of time (approximate temperature) and when it is desired to obtain information regarding the temperature with relative good accuracy in a short period of time (calculated temperature), and when there is a reserve of processing capacity available and it is desired to reliably perform analysis with high accuracy (corrected temperature), the temperature that is used in the subsequent temperature analysis may be selected in accordance with the particular situation.

### BRIEF DESCRIPTION OF THE DRAWINGS

The forgoing and further features and advantages of the invention will become apparent from the following description of example embodiments with reference to the accompanying drawings, wherein like numerals are used to represent like elements, and wherein:
FIG 1 is a drawing showing an overview of an embodiment of an analysis apparatus;
FIG. 2 is a drawing showing the configuration of a laser light transmitting/receiving controller;
FIG. 3 is a drawing showing the flow of calculation of the temperature of a measured gas;
FIG. 4 is a drawing showing the contents of a theoretical spectrum database;
FIG. 5 is a drawing showing a low-level view of the concept of the number of fittings (matchings);
FIG. 6 is a drawing showing the concept of transition from the first temperature range to the second temperature range;
FIG. 7 is a drawing showing an example of discrete-calculation correction; and
FIG. 8 is a drawing showing the relationship between a measured spectrum and a theoretical spectrum.

### DETAILED DESCRIPTION OF THE EMBODIMENTS

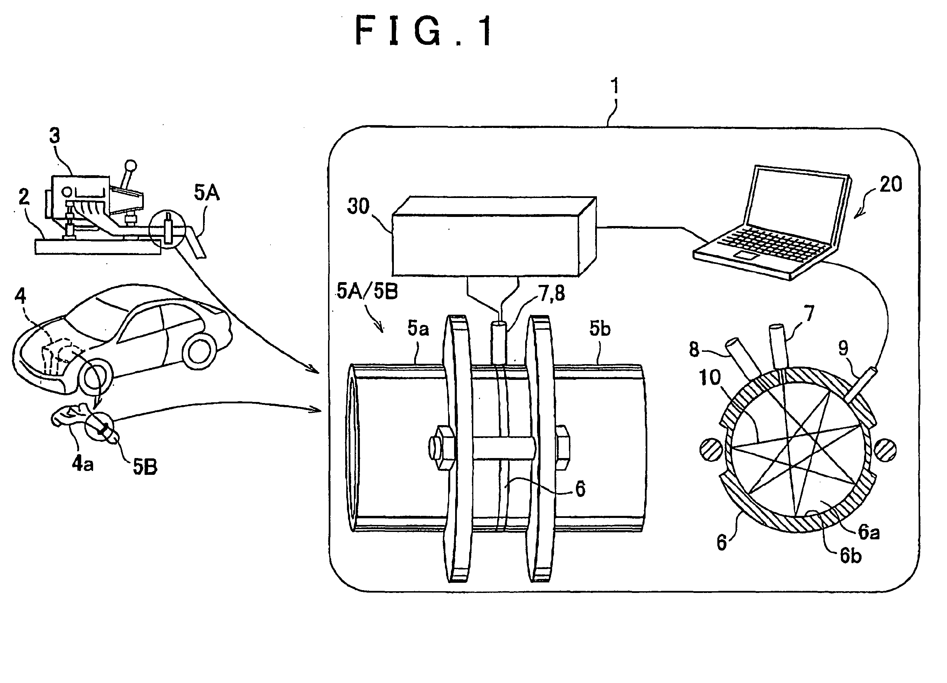

An example embodiment of the present invention is described with respect to the drawings. FIG. 1 shows an overview of an analyzer 1 utilized in an embodiment of the present invention. The analyzer 1 that irradiates an exhaust gas with an infrared laser beam 10, and includes an annular sensor base 6 interposed between an exhaust pipe 5A of an engine 3 mounted on an engine bench 2 and an exhaust pipe 5B connected to an exhaust manifold 4a of an engine 4 mounted on board a vehicle, and a light-transmitting optical fiber 7 and a light-receiving optical fiber 8 that are provided on the sensor base 6.

As shown in FIG. 1, the sensor base 6 may be, for example, interposed between the flange portions of exhaust pipes 5a, 5b. The sensor base 6 has a through hole 6a that has substantially the same inner diameter as the exhaust pipe 5A (5B). To pass the exhaust gas smoothly, the surface of the through-hole 6a is a reflecting surface 6b for introducing an infrared laser beam 10 from the light-transmitting optical fiber 7 into the light-receiving optical fiber 8. The sensor base 6 is provided with a pressure sensor 9 to detect the pressure of the exhaust gas passing through the through-hole 6a.

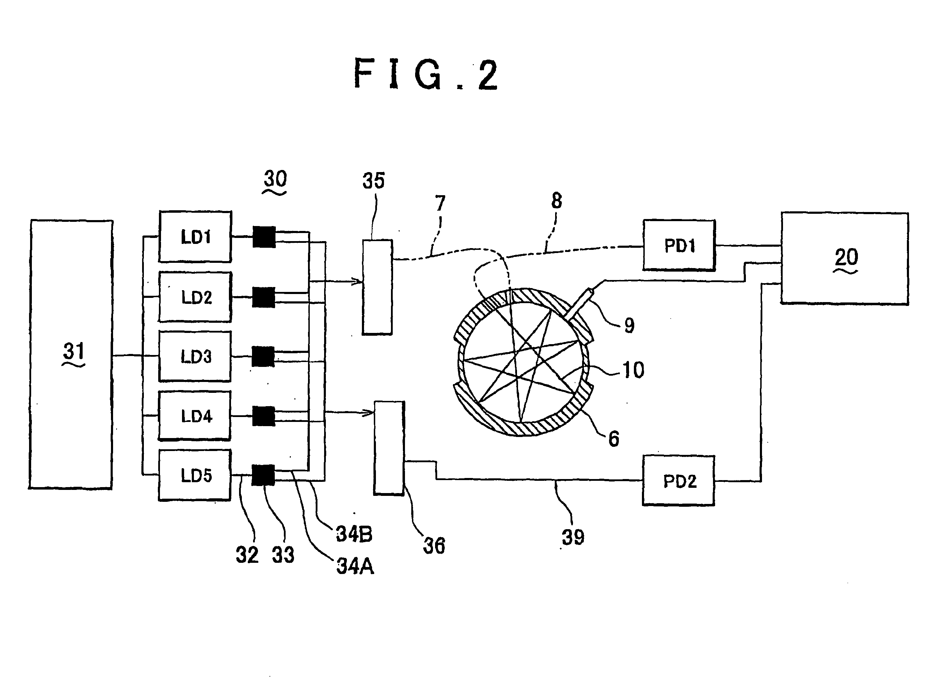

As shown in FIG. 1, the light-transmitting optical fiber 7 and the light-receiving optical fiber 8 are connected to a laser light transmitting/receiving controller 30. The laser light transmitting/receiving controller 30, is shown in FIG. 2, and serves as a multiple-wavelength infrared laser that supplies signals at a plurality of frequencies from a signal generator 31, such as a function generator, to each of a plurality of laser diodes LD1 1 to LD5. The signals of the plurality of frequencies output from the signal generator 31 are supplied to the laser diodes LD 1 to LD5, which emit infrared laser light of wavelengths corresponding to the frequencies. The wavelength of the infrared laser used is, for example, in the range of approximately from 1300 to 1700 nm.

The wavelength of the infrared laser passed through the exhaust gas in the sensor base 6 is set in accordance with the exhaust gas component to be detected. Thus, to carbon monoxide (CO), carbon dioxide (CO₂), ammonia (NH₃), methane (CH₄), and water (H₂O), infrared lasers of five different wavelengths are used. For example, 1530 nm is a suitable wavelength for detecting ammonia, 1560 nm is a suitable wavelength for detecting carbon monoxide, 1570 nm is a suitable wavelength for detecting carbon dioxide, 1680 nm is a suitable wavelength for detecting methane, and 1350 nm is a suitable wavelength for detecting water. Additionally, in order to detect other exhaust gas components, infrared lasers of additional wavelengths may need to be used. The number of laser diodes required corresponds to the number of exhaust gas components to be analyzed.

The infrared light emitted from the laser diodes LD1 to LD5 passes through the optical fibers 32 and is input to the light splitters 33, which divide the light into the measurement laser I and the reference laser Io. The measurement laser I passes through the optical fiber 34A and the light mixer 35, and then through the light-transmitting fiber 7 that guides the light to the sensor base 6. Measurement laser I is sequentially emitted from the light mixer 35 at prescribed intervals. The number of the laser diodes LD1 to LD5 provided corresponds to the number of gas components to be analyzed. For example, in the case of analyzing five gas components, five laser diodes would be provided, and in the case of analyzing ten gas components, ten laser diodes would be provided. The reference laser Io passes through the optical fiber 34B and is guided to the light mixer 36.

Laser light that is sequentially emitted from the light-transmitting optical fiber 7 and attenuated through the exhaust gas passes through the light-receiving optical fiber 8 provided in the sensor base 6 and is received by the photodiode PD1. The output of the photodiode PD1 is amplified, for example, by a pre-amplifier (not shown), passes through an A/D converter, and is input to the processing unit 20. The reference laser Io that is input to the light mixer 36 passes through an optical fiber 39 and is directly received by the photodiode PD2, the output of the photodiode PD2 being input to the processing unit 20.

The processing unit 20 synchronizes the sequentially emitted measurement laser I and the reference laser Io to correspond to the laser diodes LD1 to LD5, that is, to correspond to the gas components to be analyzed, the absorption spectrum (measured spectrum) of each gas component being measured, and the signal strength ratio (I/Io) between the intensity of the reference laser Io and the intensity of the transmitted measurement laser I also being measured. The processing unit 20 also fits the measured spectrum to theoretical spectra.

By doing the above, the signal strength ratio of each gas component is calculated, and the temperature of the exhaust gas at the time of the calculation is calculated so as to calculate the concentration of each gas component. This embodiment is directed to the calculation of the temperature of the exhaust gas, as such the description regarding the calculation of the concentration being omitted.

Next, the calculation of the temperature of the exhaust gas will be described. The exhaust gas temperature calculation may be performed separately for each gas component contained in the exhaust gas. For example, the temperature of a gas component such as H₂O, which has an absorption spectrum with a prominent peak, is calculated and may be used as a representative temperature of the exhaust gas as a whole, thereby obtaining temperature values having high reliability.

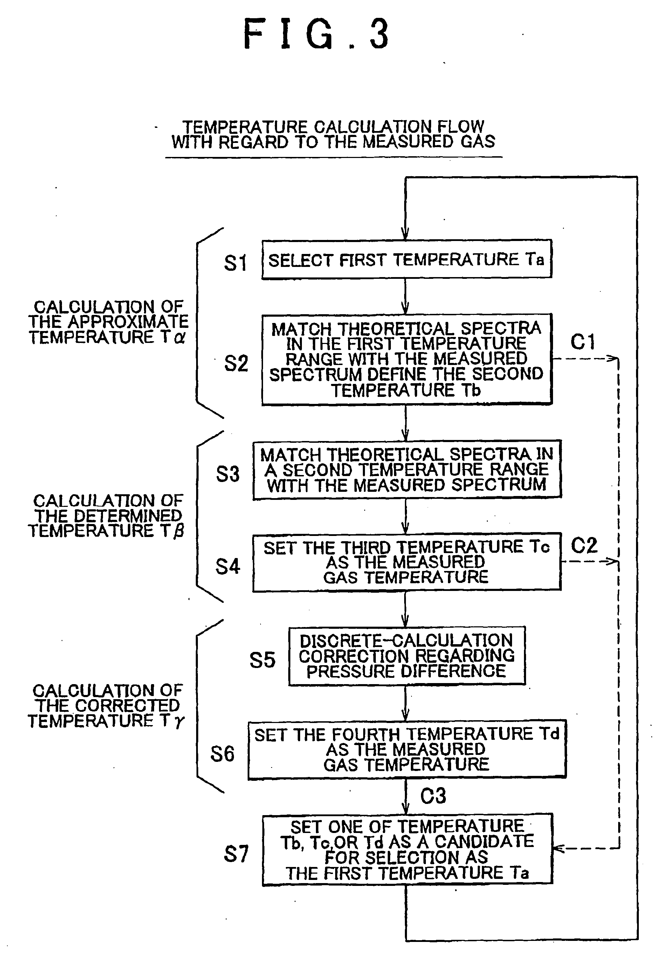

In this embodiment, as shown in FIG. 3 to FIG. 7, the exhaust gas temperature analysis method used is that of fitting the measured spectrum to theoretical spectra for each temperature TA to TB and each pressure P1, P2 and so on, and setting a temperature defined in association with a theoretical spectrum selected by the fitting as the temperature of the exhaust gas. The above-noted fitting has step (S1 and S2) of calculating an approximate temperature Tα (the second temperature Tb in this embodiment) at least once by fitting the measured spectrum to a portion of theoretical spectra defined in association with a first temperature range (TC to TD) using a temperature determined in the immediately preceding temperature analysis as a reference, and a step (S3 and S4) of determining a calculated temperature Tβ (the third temperature Tc in this embodiment) by fitting the measured spectrum to all the theoretical spectra over a second temperature range (TE to TF) that is narrower than the first temperature range, using the approximate temperature Tα as a reference.

If there is a pressure difference Δp between the pressure of the theoretical spectrum referenced in the above-noted fitting (matching) and the measured pressure P, a discrete-calculation correction is performed in step S5 on the calculated temperature Tβ with respect to the pressure difference Δp to determine a corrected temperature Tγ (fourth temperature Td).

The temperature determined in the immediately preceding temperature analysis may be the approximate temperature Tα determined in the immediately preceding temperature analysis, the calculated temperature T determined in the immediately preceding temperature analysis, or the corrected temperature Tγ determined in the immediately preceding temperature analysis.

More specifically, the exhaust gas temperature analysis method used is that of fitting (matching) the measured spectrum to theoretical spectra for each temperature TA to TB and each pressure P1, P2, and so on, and setting the temperature defined in association with the theoretical spectrum selected by the fitting (matching) as the temperature of the exhaust gas. In step S 1, a first temperature Ta is selected from the overall temperature range TA to TB with which the theoretical spectra are defined in association. In step S2, it is performed to fit (match) the measured spectrum to a plurality of theoretical spectra that are associated with the first temperature range TC to TD having the first temperature Ta as a reference and that are also defined in association with a representative pressure P2 at which the pressure difference Δp with respect to the measured pressure P is minimum, to select a theoretical spectrum Rb in which the fitting deviation (matching deviation) Δs2 with respect to the measured spectrum is minimum. In step S3, it is performed to fit (match) the measured spectrum to a plurality of theoretical spectra that are associated with the second temperature range TE to TF having the second temperature Tb as a reference and that also are defined in association with a representative pressure P2 at which the pressure difference Δp with respect to the measured pressure P is minimum, to select a theoretical spectrum Rc in which the fitting deviation Δs3 with respect to the measured spectrum is minimum. In step S4, the third temperature Tc, defined in association with the theoretical spectrum Rc selected in step S3, is determined as the temperature of the measured gas.

If there is a pressure difference Δp between the measured pressure P and the representative pressure P2, a discrete-calculation correction is performed on the third temperature Tc determined in step S4 with regard to the pressure difference Δp in step S5, and the fourth temperature Td, defined by the discrete-calculation correction performed in step S5, is determined as the temperature of the measured gas in step S6.

In step S7, one of the second temperature Tb defined in association with the theoretical spectrum Rb selected in the second step S2, the third temperature Tc defined in association with the theoretical spectrum Tc selected in the third step S3, or the fourth temperature Td determined as the temperature of the measured gas in the sixth step S6, is defined as a selection candidate for the first temperature Ta in the first step S1 of the succeeding temperature analysis.

By doing the above, it is possible to reduce the number of times to fit (match) the measured spectrum to the theoretical spectra, making it possible to perform gas component analysis at high speed by reducing the calculation time. In addition, the method also facilitates more precise analysis by allowing the collection of a large amount of data. By performing discrete-calculation correction, it is possible to eliminate the influence of the pressure difference Δp, thereby improving reliability of resultant data obtained.

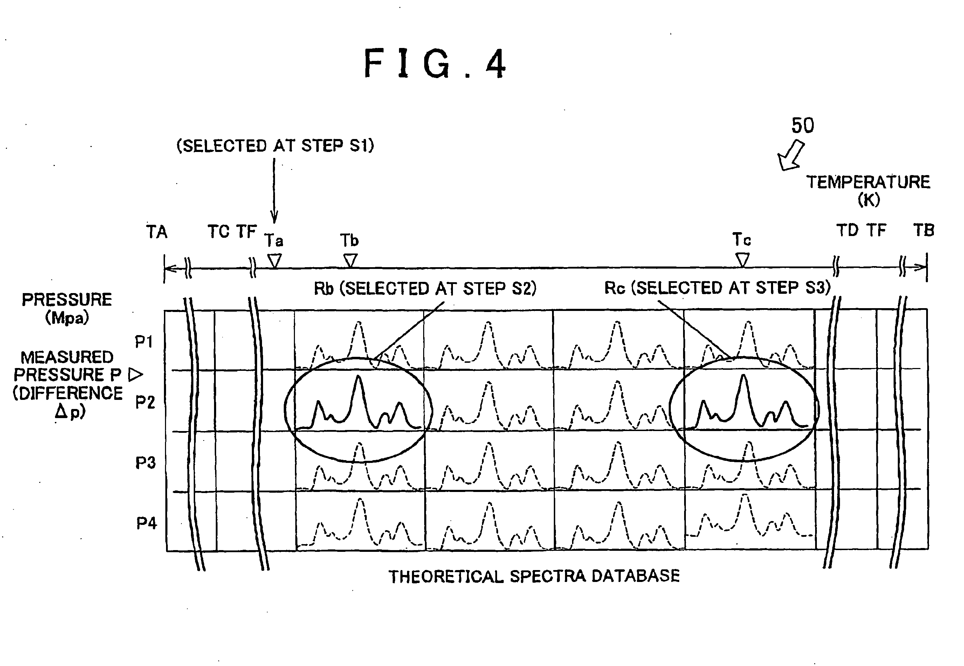

Each step of the method will be described in detail below. First, in step S1, as shown in FIG. 4 to FIG. 6, a first temperature Ta is selected from the overall temperature range TA to TB in which the theoretical spectra are defined. The overall temperature range may be, for example, 0K to 1000K.

The first temperature Ta may be one of the second temperature Tb determined in step S2, the third temperature Tc determined in step S3, or the fourth temperature Td determined in step S6 in the flow of the immediately preceding temperature analysis. In this manner, in step S 1 the temperatures Tb, Tc, and Td determined in the preceding temperature analysis are referenced. Also, in the first temperature analysis, because there are no temperatures Tb, Tc, and Td to reference, instead of performing a fitting within the first temperature range TC to TD in step S2, fitting is performed over the entire temperature range TA to TB.

As shown in FIG 4, the theoretical spectra are uniquely defined beforehand for a series of temperatures and pressures for gas components such as H₂O that has a prominent peak in its absorption spectrum, and are formed into a temperature/pressure factor database, for example, shown by table 50. For example, at a pressure P2 and a temperature Tb, the theoretical spectrum Rb is uniquely defined. The database is created, for example, in increments of 1K in temperature and increments of 0.1 Mpa (megapascals) in pressure. In this manner, by forming a database beforehand, comparing with the configuration in which a theoretical spectrum is calculated every time it is needed, because it is possible to perform fitting by referencing the theoretical spectra, the present embodiment greatly reduces the calculation time.

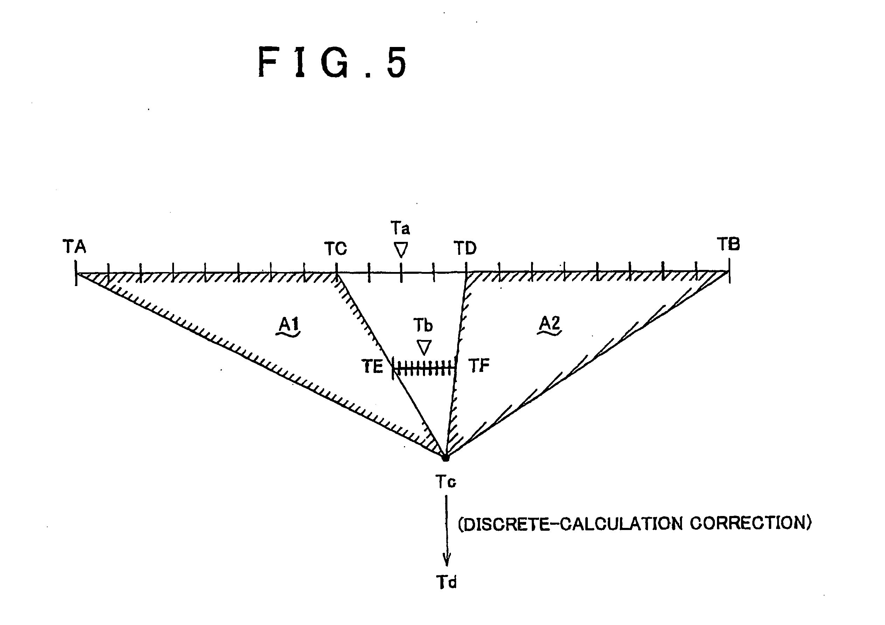

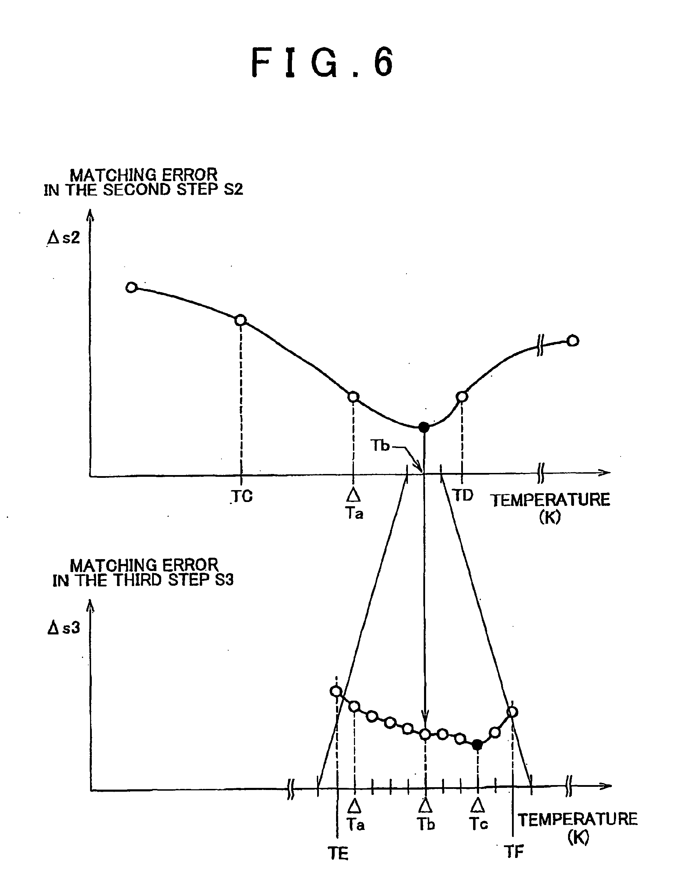

Next, in step S2, as shown in FIG. 5 and FIG. 6, a first temperature range TC to TD is established using the first temperature Ta as a reference. For example, if the first temperature Ta is 357K, the first temperature range TC to TD is set equal to the range of ±50K from the first temperature Ta, that is, 307K to 407K. The form in which this is done is not particularly limited to the above described method. For example, it is possible to reference only the first two digits, thereby making the temperature range TC to TD to be the range of 350K ± 50K, or the temperature range TC to TD may be obtained increasing the range to ± 100K.

In step S2, as shown in FIG. 4, a representative pressure P2 at which the pressure difference Δp with respect to the measured pressure P is minimum, is selected from the pressures P1, P2, and so on, which are established in the table 50. The measured pressure P may be measured by the pressure sensor 9 (refer to FIG. 1). The table 50 may be stored beforehand in the processing unit 20 and referenced when fitting (matching) is performed.

In step S2, as shown in FIG. 4, it is performed to fit the measured spectrum to a plurality of theoretical spectra. The plurality of theoretical spectra are defined in association with the first temperature range TC to TD, using a first temperature Ta as a reference. The plurality of theoretical spectra are also defined in association with a representative pressure P2 at which the pressure difference Δp with respect to the measured pressure P is minimum. Then, a theoretical spectrum Rb in which the fitting deviation Δs2 with respect to the measured spectrum is minimum is selected. In this fitting, of the theoretical spectra in the line of P2, which is the representative pressure, in the table 50, the spectra that are associated with the first temperature range TC to TD are referenced, and fitting is performed with the measured spectrum. The measured spectrum is measured by the processing unit 20. The method of the fitting is performed in a manner similar to the related art described with reference to FIG 8, in which the absorption amount curve is integrated and a theoretical spectrum is determined for which the surface area difference (which, in this case, is the fitting deviation Δs2) is at a minimum when compared to the measured spectrum, and also in which the calculation is performed taking into consideration the level of coincidence with the peak wavelength in making this determination. However, there are no particular restrictions to the method used.

Additionally, for example, if the theoretical spectrum is defined in increments of 1K and the first temperature range TC to TD has a span of 100K (the ± 50K case noted above), if an attempt is made to fit the measured spectrum to all the theoretical spectra, the calculation must be performed 100 times, this number of calculations presenting a great load. Given this, for example, ten theoretical spectra are selected in 10K units starting at the lowest temperature in association with the first temperature range TC to TD, and it is performed to fit the measured spectrum to the ten selected theoretical spectra only, thereby enabling a great reduction in the number of calculations, and a shortening of the calculation time.

That is, the theoretical spectra that are the targets of fitting in step S2 are set as a portion of the theoretical spectra defined in association with the first temperature range TC to TD, for example, taken at a prescribed temperature interval (10K intervals in this example), to select theoretical spectra and reduce the number of fittings. By using a prescribed temperature interval, it is possible for the theoretical spectrum to represent the theoretical spectra corresponding to the surrounding temperatures, thereby enabling extraction with little dispersion from the first temperature range TC to TD, which the superset of temperatures, and enabling an improvement in reliability.

Next, in step S3, as shown in FIG. 5 and FIG 6 (lower part), the second temperature range TE to TF is first established with the second temperature Tb that is defined in association with the theoretical spectrum Rb selected in step S2 as a reference temperature. For example, if the second temperature Tb is 372K, the second temperature range TE to TF may be taken as ±10K, that is, as the range 362K to 382K. In this manner, the second temperature range TE to TD in the third step S3 is established in accordance with condition that the temperature range thereof is narrower than the first temperature range in the second step S2. As long as this condition is satisfied, the form of establishing the second temperature range TE to TF is not particularly restricted to the method described herein. For example, it is possible to reference only the first two digits, thereby making the second temperature range TE to TF to be a ± 10K range about 370K, or the second temperature range TE to TD may be taken as ± 5K with respect the reference temperature.

In step S3, as shown in FIG. 4, it is performed to fit the measured spectrum to a plurality of theoretical spectra. The plurality of theoretical spectra are defined in association with the second temperature range TE to TF, using a second temperature Tb as a reference, and are also defined in association with a representative pressure P2 at which the pressure difference Δp with respect to the measured pressure P is minimum. Then, a theoretical spectrum Rc in which the fitting deviation Δs3 with respect to the measured spectrum is minimum is selected. In this fitting, of the theoretical spectra in the line of P2, which is the representative pressure, in the table 50, the spectra that are associated with the first temperature range TE to TF are referenced, and fitting is performed with the measured spectrum. The measured spectrum is measured by the processing unit 20. The fitting is performed by integrating the absorption amount curve and determining a theoretical spectrum for which the surface area difference (which, in this case, is the fitting deviation Δs3) is at a minimum when compared to the measured spectrum, and also by performing the calculation that takes into consideration the level of coincidence with the peak wavelength in making this determination, although there are no particular restrictions to this method.

With regard to the fitting in step S3, for example, when the theoretical spectra are defined in increments of 1K, if the span of second temperature range TE to TF is 20K (the case of ± 10K described above), fitting of the measured spectrum is performed to all the theoretical spectra, and narrowing down is performed based on the minimum temperature unit (in this example, 1K) that enables fitting by theoretical spectra.

That is, the theoretical spectra that are the targets of fitting in step S3 are all the theoretical spectra that are defined in association with the second temperature range TE to TF.

Next, as shown in FIG. 3, in step S4, the third temperature Tc, defined in the theoretical spectrum Rc, is taken as the temperature of the measured gas. Because the temperature Tc of the measured gas that is determined at this stage does not take into consideration, in the calculation process, the pressure difference Δp between the measured pressure P and the representative pressure P2, and, because the temperature Tc is a discretely calculated value, a discrete-calculation correction is then performed in step S5.

That is, as shown in FIG. 3, in step S5, if there is a pressure difference Δp between the measured pressure P and the representative pressure P2, a discrete-calculation correction is performed on the third temperature Tc and in step S6, the fourth temperature Td, defined by the discrete-calculation correction performed in step S5, is taken as the temperature of the measured gas.

The discrete-calculation correction performed in step S5, for example, as shown in FIG 7, establishes a temperature offset amount αK based on the pressure difference Δp between the measured pressure P and the representative pressure P2, and adds the temperature offset amount α to the third temperature Tc. In the example shown in FIG. 7, the measured pressure P is 0.03 Mpa higher than the representative pressure P2, and a corresponding temperature offset amount α is used.

The relationship between the "pressure difference Δp" and the "temperature offset amount" is evaluated and calculated beforehand with regard to the measured gas components for the purpose of measuring the temperature, and is stored as a function N in the processing unit 20. If the order of the function N stored in this manner in the processing unit 20 is small, it is possible to reduce the load of the calculations required to perform discrete-calculation correction of the pressure. The discrete-calculation correction of the pressure is not restricted to this embodiment. For example, the temperature may be corrected by multiplying the third temperature Tc by the pressure correction coefficient, which corresponds to the "pressure difference Δp" stored in the processing unit 20.

Next, as shown in FIG. 3, in step S7, the fourth temperature Td which was taken as the temperature of the measured gas in step S6, is defined as a candidate for selection as the first temperature Ta for step S1 in the subsequent temperature analysis. By doing this, it is possible to use the fourth temperature Td that was corrected and calculated by a highly accurate analysis in the subsequent step S1.

As shown in FIG. 3, in step S7, either of the second temperature Tb defined in association with the theoretical spectrum Rb selected in step S2 or the third temperature Tc defined in association with the theoretical spectrum Rc selected in step S3 may be defined as a candidate for selection as the first temperature Ta in step S 1 of the subsequent temperature analysis. This may be effectively used to determine the approximate temperature (approximate temperature Tα, that is, second temperature Tb) at the end of step S2 when information regarding the approximate temperature needs to be obtained in a short period of time (case C1). In the same manner, this may also be used to determine the temperature (calculated temperature Tβ, that is, third temperature Tc) at the end of step S4 when relatively accurate information regarding the temperature needs to be obtained in a short period of time (case C2). When there is reserve of processing capacity and it is desirable to perform analysis with increased accuracy, the corrected temperature Tγ (fourth temperature Td) may be determined.

In the processing unit 20, the temperatures T1, T2, and T3 (Tb, Tc, and Td) may be continuously monitored in real time, and the temperatures may be referenced effectively in response to the situation.

Additionally, a previously determined second temperature Tb may be used to detect errors in the calculation process and mechanical errors. For example, if the second temperature Tb coincides with a border value of the first temperature range TC to TD, the second temperature Tb will differ greatly from the first temperature Ta, and this fact may be used to identify a discontinuous change in the temperature and perform error detection.

Also, step S2 may be executed a plurality of times. That is, in step S3, when determining the second temperature Tb used for theoretical spectrum referencing, the narrowing down of the second temperature Tb is performed by executing, in step-wise fashion, a step such as the second step S2 a plurality of times.

With regard to the above-described method, the design can be made in accordance with the required analysis time, and by changing the design it is possible to accommodate the required analysis time.

Additionally, with regard to reducing the number of fittings and the calculation time, in the case of, for example, a different embodiment, there is a need to fit the measured spectrum to all the theoretical spectra over the overall temperature range TA to TB. All regions surrounded by TA, TB, and Tc until finally reaching the third temperature Tc may be regarded as a calculation load. In contrast, according to this embodiment, the region surrounding by TC, TE, Tc, TF, and TD may be regarded as the calculation load. Thus, it is possible to reduce the calculation load with regard to the regions A1 and A2.

With regard to the specific number of fittings in the overall temperature range TA to TB of 1000K, for example, if the theoretical spectra are defined in increments of 1K, a simple calculation shows that there is a need to perform fitting 1000 times. In contrast, in this embodiment it is possible to narrow down to the third temperature Tc by performing the fitting a total of 20 times, specifically by performing fitting 10 times in the first temperature range TC to TD in step S2, and performing fitting 10 times in the second temperature range TE to TF in step S3. If it is desired to perform temperature analysis with higher accuracy, this can be done by increasing the number of theoretical spectra that are fitted, and the number of fittings can be set in response to the required accuracy.

The above-noted analysis may be implemented using an apparatus having the following constitution. Specifically, the apparatus may be an exhaust gas temperature analysis apparatus that fits a measured spectrum of a measured gas to theoretical spectra for each temperature TA to TB and each pressure P1, P2, and so on, and sets a temperature that is defined in association with a theoretical spectrum selected by performing fitting as the temperature of the measured gas. The exhaust gas temperature analysis apparatus includes a first device that fits the measured spectrum to a portion of the theoretical spectra defined in association with the first temperature range (TC to TD) at least one time, using a temperature determined in the immediately preceding time (Ta, Tb, Tc, Td) as a reference, and that determines an approximate temperature Tα (in this embodiment, the second temperature Tb), and a second device that fits the measured spectrum to all theoretical spectra defined in association with the second temperature range (TE to TF) that is narrower than the first temperature range, and that determines a calculated temperature Tβ (in this embodiment, the third temperature Tc).

The above apparatus has a discrete-calculation correction device that performs a discrete-calculation correction on the calculated temperature Tβ with regard to the pressure difference Δp if there is a pressure difference Δp between the pressure in a theoretical spectrum referenced in the fitting and the measured pressure P of the measured gas, to determine the corrected temperature Tγ.

More specifically, as shown in FIG 3 to FIG. 7, the apparatus is an exhaust gas temperature analysis apparatus that fits the measured spectrum to theoretical spectra for each temperature TA to TB and each pressure P1, P2 and so on, and sets the temperature, defined in association with the theoretical spectrum selected by the fitting, as the temperature of the measured gas. The apparatus includes a storage device that stores a plurality of theoretical spectra that are uniquely defined for a series of temperatures and pressures; a first device that selects a first temperature Ta from an overall temperature range TA to TB that is associated with the theoretical spectra stored in the above-noted storage device; a second device that fits the measured spectrum to a plurality of theoretical spectra that are defined in association with the first temperature range TC to TD, using the first temperature Ta as a reference and that also are defined in association with a representative pressure P2 at which the pressure difference Δp with respect to the measured pressure P is minimum, to select a theoretical spectrum Rb in which the fitting deviation Δs2 with respect to the measured spectrum is minimum; a third device that fits the measured spectrum to a plurality of theoretical spectra that are associated with the second temperature range TE to TF having the second temperature Tb, which is defined in association with the theoretical spectrum Rb selected by the second device, as a reference and that also are defined in association with a representative pressure P2 at which the pressure difference Δp with respect to the measured pressure is minimum, to thereby select a theoretical spectrum Rc in which the fitting deviation As3 with respect to the measured spectrum is minimum; and a fourth device that sets the third temperature Tc defined in association with the theoretical spectrum Rc as the temperature of the measured gas.

If there is a pressure difference Δp between the measured pressure P and the representative pressure P2, a fifth device performs a discrete-calculation correction on the third temperature Tc with regard to the pressure difference Δp, and a sixth device sets the fourth temperature Td as the temperature of the measured gas.

There is also a seventh device that defines any one of the second temperature Tb defined in association with the theoretical spectrum Rb selected by the second device, the third temperature Tc defined in association with the theoretical spectrum Tc selected by the third device, or the fourth temperature Td set as the temperature of the measured gas by the sixth device, as a selection candidate for the first temperature Ta in the first device in the subsequent temperature analysis.

The function of the above-noted apparatus may be implemented in the processing unit 20 of this embodiment. Specifically, the above devices may be implemented in a computer that combines a CPU, memory, and a database, and also be a dedicated microprocessing unit. It is also possible to access a dedicated database via a network to reference the table 50, and diverse variations are implementable utilizing widely known art.

The above-noted arrangement may also be implemented by a program.

Specifically, this may be an exhaust gas temperature analysis program that includes instructions for fitting a measured spectrum to theoretical spectra defined in association with each temperature TA to TB and each pressure P1, P2 and so on, and setting a temperature, defined in association with the theoretical spectrum selected by the fitting, as the temperature of the measured gas. The temperature analysis program uses a computer to, at least one time, fits the measured spectrum to a portion of the theoretical spectra defined in association with the first temperature range (TC to TD), using a temperature (Ta, Tb, Tc, or Td) determined in the immediately preceding analysis as a reference, and to determine an approximate temperature Tα (in this embodiment, the second temperature Tb), and to fit the measured spectrum to all theoretical spectra defined in association with the second temperature range (TE to TF) that is narrower than the first temperature range, and then to determine a calculated temperature Tβ (in this embodiment, the third temperature Tc).

The above-noted program has an exhaust gas temperature analysis block that causes the computer to function as a discrete-calculation correction device that performs a discrete-calculation correction on the calculated temperature Tβ with regard to the pressure difference Δp if there is a pressure difference Δp between the pressure in a theoretical spectrum referenced in the fitting and the measured pressure P of the measured gas, to determine the corrected temperature Tγ (the fourth temperature Td).

More specifically, as shown in FIG 3 to FIG. 7, the program is an exhaust gas temperature analysis program for the purpose of fitting a measured spectrum to theoretical spectra defined in association with each temperature TA to TB and each pressure P1, P2 and so on, and setting a temperature defined in association with the theoretical spectrum selected by the fitting as the temperature of the measured gas, this program instructs a computer to function as a storage device that stores a plurality of theoretical spectra that are uniquely defined for a series of temperatures and pressures, a first device that selects a first temperature Ta from an overall temperature range TA to TB that are associated with the theoretical spectra stored in the above-noted storage device, a second device fits the measured spectrum to a plurality of theoretical spectra that are defined in association with the first temperature range TC to TD, using the first temperature Ta as a reference and that also are defined in association with a representative pressure P2 at which the pressure difference Δp with respect to the measured pressure P is minimum, to select a theoretical spectrum Rb in which the fitting deviation Δs2 with respect to the measured spectrum is minimum, a third device that fits the measured spectrum to a plurality of theoretical spectra that are associated with the second temperature range TE to TF having the second temperature Tb, which is defined in association with the theoretical spectrum Rb selected by the second device, as a reference and that also are defined in association with a representative pressure P2 at which the pressure difference Δp with respect to the measured pressure is minimum, to select a theoretical spectrum Rc in which the fitting deviation Δs3 with respect to the measured spectrum is minimum, and a fourth device that sets the third temperature Tc, defined in association with the theoretical spectrum Rc, as the temperature of the measured gas.

The exhaust gas temperature analysis program instructs the computer to execute the functions of a fifth device that performs a discrete-calculation correction on the third temperature Tc with regard to the pressure difference Δp if there is a pressure difference Δp between the measured pressure P and the representative pressure P2, and a sixth device that sets the fourth temperature Td as the temperature of the measured gas.

The exhaust gas temperature analysis program uses the computer as a seventh device that may define one of the second temperature Tb defined in association with the theoretical spectrum Rb, the third temperature Tc defined in association with the theoretical spectrum Tc, or the fourth temperature Td set as the temperature of the measured gas by the sixth device, as a candidate for the first temperature Ta used in the first device in a subsequent temperature analysis.

According to the above-described temperature analysis program, it is possible to implement high-speed processing, and also to implement highly accurate exhaust gas analysis.

## Claims

1. A method for determining a temperature of exhaust gas by fitting a measured spectrum of a measured gas to pre-defined theoretical spectra defined for a series of temperatures (TA to TB) and pressures (P1, P2, P3, P4), wherein the temperature of the measured gas is defined as that of the theoretical spectrum that most closely fits the measured spectrum wherein the measured spectrum and the theoretical spectrum are derived from laser light absorbed in the exhaust gas and
wherein a laser light that is irradiated to the exhaust gas is an infrared laser light, the method **characterized by** comprising:
calculating an approximate temperature (Tα) at least once by fitting the measured spectrum and a portion of the theoretical spectra defined in association with a first temperature range (TC to TD) using a temperature, determined in an immediately preceding temperature analysis, as a reference, and
determining a calculated temperature (Tβ) by fitting the measured spectrum to all the theoretical spectra over a second temperature range (TE to TF) that includes the approximate temperature (Tα) and that is narrower than the first temperature range (TC to TD).

2. The method for temperature analysis of exhaust gas according to claim 1, **characterized by** further comprising:
performing a discrete-calculation correction on the calculated temperature (Tβ) with respect to a pressure difference (Δp) when there is a difference between a pressure of the theoretical spectra referred in the fitting and a measured pressure of the measured gas to determine a corrected temperature (Tγ).

3. The method for temperature analysis of exhaust gas according to claim 1 or 2, wherein the temperature calculated in the immediately preceding temperature analysis is one of an approximate temperature (Tα) determined in the immediately preceding temperature analysis, a calculated temperature (Tβ) determined in the immediately preceding temperature analysis, or a corrected temperature (Tγ) determined in the immediately preceding temperature analysis.

4. An exhaust gas temperature analysis apparatus (1) that is adapted to fit the measured spectrum of a measured gas to all theoretical spectra defined for a series of temperatures (TA to TB) and pressures (P1, P2, P3, P4), wherein the temperature of the measured gas is defined as that of the theoretical spectrum that most closely fits the measured spectrum wherein the measured spectrum and the theoretical spectrum are derived from laser light absorbed in the exhaust gas and
wherein a laser light that is irradiated to the exhaust gas is an infrared laser light, the apparatus **characterized by** comprising:
a first device that is adapted to fit a measured spectrum to a portion of the theoretical spectra, defined in association with a first temperature range (TC to TD) having a temperature determined in the immediately preceding analysis as a reference; and
a second device that is adapted to fit the measured spectrum to all theoretical spectra defined in a second temperature range (TE to TF) that is narrower than the first temperature range (TC to TD), to determine a calculated temperature (Tβ).

5. The exhaust gas temperature analysis apparatus according to claim 4, **characterized by** further comprising:
a discrete-calculation correction device that performs a discrete-calculation correction on the calculated temperature (Tβ) with respect to a pressure difference (Δp) if there is a difference between the pressure in a theoretical spectrum referenced in the fitting and the measured pressure, to determines a corrected temperature (Tγ).

6. The exhaust gas temperature analysis apparatus according to either claim 4 or claim 5, wherein the temperature determined in the immediately preceding temperature analysis is one of an approximate temperature (Tα) determined in the immediately preceding temperature analysis, a calculated temperature (Tβ) determined in the immediately preceding temperature analysis, or a corrected temperature (Tγ) determined in the immediately preceding temperature analysis.

7. A computer-readable storage medium that stores an exhaust gas temperature analysis program executable by a computer to fit a measured spectrum of a measured gas to theoretical spectra that are pre-defined for a series of temperatures (TA to TB) and pressures (P1, P2, P3, P4), wherein the temperature of the measured gas is defined as that of the theoretical spectrum that most closely fits the measured spectrum wherein the measured spectrum and the theoretical spectrum are derived from laser light absorbed in the exhaust gas and
wherein a laser light that is irradiated to the exhaust gas is an infrared laser light, the program **characterized by** comprising instructions for:
calculating an approximate temperature (Tα) at least once by fitting the measured spectrum to a portion of the theoretical spectra defined in association with a first temperature (TC to TD) range using a temperature, determined in the immediately preceding temperature analysis, as a reference, and
determining a calculated temperature (Tβ) by fitting the measured spectrum to all the theoretical spectra defined in association with a second temperature range (TE to TF) that is narrower than the first temperature range (TC to TD), using the approximate temperature (Tα) as a reference.

8. The computer-readable storage medium according to claim 7, which stores an exhaust gas temperature analysis program, the program **characterized by** further comprising instructions for:
performing a discrete-calculation correction on the calculated temperature (Tβ) with respect to a pressure difference (Δp) when there is a difference between the pressure in a theoretical spectrum referenced in the fitting and the measured pressure of the measured gas to determine a corrected temperature (Tγ).

9. The computer-readable storage medium according to claim 7 or claim 8, which stores an exhaust gas temperature analysis program, wherein the temperature determined in the immediately preceding temperature analysis is one of an approximate temperature (Tα) determined in the immediately preceding temperature analysis, a calculated temperature (Tβ) determined in the immediately preceding temperature
analysis, or a corrected temperature (Tγ) determined in the immediately preceding temperature analysis.

## Patentansprüche

1. Verfahren zum Bestimmen einer Temperatur eines Abgases durch Anpassen eines Messspektrums eines Messgases auf vordefinierte theoretische Spektren, die für eine Reihe von Temperaturen (TA bis TB) und Drücken (P1, P2, P3, P4) definiert sind, wobei die Temperatur des Messgases als die des theoretischen Spektrums definiert ist, das am stärksten an das Messspektrum angepasst ist, wobei das Messspektrum und das theoretische Spektrum aus in dem Abgas absorbierten Laserlicht hergeleitet wird und wobei ein Laserlicht, mit dem das Abgas bestrahlt wird, Infrarotlaserlicht ist, wobei das Verfahren **dadurch gekennzeichnet ist, dass** es folgende Schritte beinhaltet:
Berechnen einer genäherten Temperatur (Tα) zumindest einmal durch Anpassen des Messspektrums und eines Bereichs der theoretischen Spektren, die in Verbindung mit einem ersten Temperaturbereich (TC bis TD) definiert werden, unter Verwendung einer Temperatur, die in einer unmittelbar vorangegangenen Temperaturanalyse bestimmt wird, als eine Referenz, und
Bestimmen einer berechneten Temperatur (Tβ) durch Anpassen des Messspektrums an alle theoretischen Spektren über einem zweiten Temperaturbereich (TE bis TF), der die genäherte Temperatur (Tα) beinhaltet und enger ist als der erste Temperaturbereich (TC bis TD).

2. Verfahren für eine Temperaturanalyse eines Abgases nach Anspruch 1, **dadurch gekennzeichnet, dass** es ferner beinhaltet:
Ausführen einer diskret berechneten Korrektur an der berechneten Temperatur (Tβ) in Bezug auf eine Druckdifferenz (Δp), wenn eine Differenz zwischen einem Druck der theoretischen Spektren, die beim Anpassen herangezogen werden, und einem Messdruck des Messgases vorliegt, um eine korrigierte Temperatur (Tγ) zu bestimmen.

3. Verfahren für eine Temperaturanalyse eines Abgases nach Anspruch 1 oder 2, wobei die in der unmittelbar vorangegangenen Temperaturanalyse berechnete Temperatur entweder einer genäherte Temperatur (Tα), die in der unmittelbar vorangegangenen Temperaturanalyse bestimmt wird, eine berechnete Temperatur (Tβ), die in der unmittelbar vorangegangenen Temperaturanalyse bestimmt wird, oder eine korrigierte Temperatur (Tγ) ist, die in der unmittelbar vorangegangenen Temperaturanalyse bestimmt wird.

4. Abgastemperaturanalysevorrichtung (1), die geeignet ist, um das Messspektrum eines Messgases an alle theoretischen Spektren anzupassen, die für eine Reihe von Temperaturen (TA bis TB) und Drücken (P1, P2, P3, P4) definiert sind, wobei die Temperatur des Messgases als die des theoretischen Spektrums definiert ist, das am stärksten an das Messspektrum angepasst ist, wobei das Messspektrum und das theoretische Spektrum aus in dem Abgas absorbiertem Laserlicht hergeleitet werden und wobei ein Laserlicht, mit dem das Abgas bestrahlt wird, Infrarotlaserlicht ist, wobei die Vorrichtung **dadurch gekennzeichnet ist, dass** sie aufweist:
eine erste Vorrichtung, die geeignet ist, ein Messspektrum an einen Bereich der theoretischen Spektren anzupassen, die in Verbindung mit einem ersten Temperaturbereich (TC bis TD) definiert werden, der eine Temperatur, die in einer unmittelbar vorangegangenen Temperaturanalyse bestimmt wird, als eine Referenz aufweist; und
eine zweite Vorrichtung, die geeignet ist, das Messspektrum an alle theoretischen Spektren anzupassen, die in einem zweiten Temperaturbereich (TE bis TF) definiert sind, der enger ist als der erste Temperaturbereich (TC bis TD), um eine berechnete Temperatur (Tβ) zu bestimmen.

5. Abgastemperaturanalysevorrichtung nach Anspruch 4, **dadurch gekennzeichnet, dass** die Vorrichtung ferner aufweist:
eine Diskrete-Berechnungs-Korrekturvorrichtung, die eine diskret berechnete Korrektur an der berechneten Temperatur (Tβ) in Bezug auf eine Druckdifferenz (Δp) ausführt, wenn eine Differenz zwischen dem Druck in einem theoretischen Spektrum, das beim Anpassen herangezogen wird, und dem Messdruck vorliegt, um eine korrigierte Temperatur (Tγ) zu bestimmen.

6. Abgastemperaturanalysevorrichtung nach Anspruch 4 oder Anspruch 5, wobei die in der unmittelbar vorangegangenen Temperaturanalyse berechnete Temperatur entweder einer genäherte Temperatur (Tα), die in der unmittelbar vorangegangenen Temperaturanalyse bestimmt wird, eine berechnete Temperatur (Tβ), die in der unmittelbar vorangegangenen Temperaturanalyse bestimmt wird, oder eine korrigierte Temperatur (Tγ) ist, die in der unmittelbar vorangegangenen Temperaturanalyse bestimmt wird.

7. Computerlesbares Speichermedium, das ein Abgastemperaturanalyse-Programm speichert, das durch einen Computer ausführbar ist, um ein Messspektrum eines Messgases an theoretische Spektren anzupassen, die für eine Reihe von Temperaturen (TA bis TB) und Drücken (P1, P2, P3, P4) definiert sind, wobei die Temperatur des Messgases als die des theoretischen Spektrums definiert ist, das am stärksten an das Messspektrum angepasst ist, wobei das Messspektrum und das theoretische Spektrum aus in dem Abgas absorbiertem Laserlicht hergeleitet werden und wobei ein Laserlicht, mit dem das Abgas bestrahlt wird, Infrarotlaserlicht ist, wobei das Programm **dadurch gekennzeichnet ist, dass** es folgende Anweisungen aufweist:
Berechnen einer genäherten Temperatur (Tα) zumindest einmal durch Anpassen des Messspektrums und eines Bereichs der theoretischen Spektren, die in Verbindung mit einem ersten Temperaturbereich (TC bis TD) definiert werden, unter Verwendung einer Temperatur, die in der unmittelbar vorangegangenen Temperaturanalyse bestimmt wird, als eine Referenz, und
Bestimmen einer berechneten Temperatur (Tβ) durch Anpassen des Messspektrums an alle theoretischen Spektren, die in Verbindung mit einem zweiten Temperaturbereich (TE bis TF) definiert werden, der enger ist als der erste Temperaturbereich (TC bis TD), unter Verwendung der genäherten Temperatur (Tα) als eine Referenz.

8. Computerlesbares Speichermedium nach Anspruch 7, das ein Abgastemperaturanalyseprogramm speichert, wobei das Programm **dadurch gekennzeichnet ist, dass** es ferner Anweisungen beinhaltet zum:
Ausführen einer diskret berechneten Korrektur an der berechneten Temperatur (Tβ) in Bezug auf eine Druckdifferenz (Δp), wenn eine Differenz zwischen dem Druck in einem theoretischen Spektrum, der beim Anpassen herangezogen wird, und einem Messdruck des Messgases vorliegt, um eine korrigierte Temperatur (Tγ) zu bestimmen.

9. Computerlesbares Speichermedium nach Anspruch 7 oder 8, das ein Abgastemperaturanalyseprogramm speichert, wobei die in der unmittelbar vorangegangenen Temperaturanalyse bestimmte Temperatur entweder eine genäherte Temperatur (Tα), die in der unmittelbar vorangegangenen Temperaturanalyse bestimmt wird, eine berechnete Temperatur (Tβ), die in der unmittelbar vorangegangenen Temperaturanalyse bestimmt wird, oder eine korrigierte Temperatur (Tγ) ist, die in der unmittelbar vorangegangenen Temperaturanalyse bestimmt wird.

## Revendications

1. Procédé de détermination d'une température de gaz d'échappement en faisant correspondre un spectre mesuré d'un gaz mesuré à des spectres théoriques prédéfinis qui sont définis pour une série de températures (TA à TB) et de pressions (P1, P2, P3, P4), dans lequel la température du gaz mesuré est définie comme étant celle du spectre théorique qui correspond le plus étroitement au spectre mesuré, dans lequel le spectre mesuré et le spectre théorique sont déduits d'une lumière laser absorbée dans le gaz d'échappement, et dans lequel une lumière laser qui est rayonnée vers le gaz d'échappement est une lumière laser infrarouge, le procédé étant **caractérisé en ce qu'**il consiste à :
calculer une température approximative (Tα) au moins une fois en faisant correspondre le spectre mesuré à une partie des spectres théoriques définis en association avec une première plage de température (TC à TD) en utilisant une température, déterminée dans une analyse de température immédiatement précédente, en tant que référence, et
déterminer une température calculée (Tβ) en faisant correspondre le spectre mesuré à tous les spectres théoriques dans une deuxième plage de température (TE à TF) qui comprend la température approximative (Tα) et qui est plus étroite que la première plage de température (TC à TD).

2. Procédé d'analyse de température de gaz d'échappement selon la revendication 1, **caractérisé en ce qu'**il consiste en outre à :
appliquer une correction de calcul discrète à la température calculée (Tβ) par rapport à une différence de pression (Δp) lorsqu'il y a une différence entre une pression des spectres théoriques référencés lors de la mise en correspondance et une pression mesurée du gaz mesuré pour déterminer une température corrigée (Tγ).

3. Procédé d'analyse de température de gaz d'échappement selon la revendication 1 ou 2, dans lequel la température calculée dans l'analyse de température immédiatement précédente est l'une d'une température approximative (Tα) déterminée dans l'analyse de température immédiatement précédente, d'une température calculée (Tβ) déterminée dans l'analyse de température immédiatement précédente, ou d'une température corrigée (Tγ) déterminée dans l'analyse de température immédiatement précédente.

4. Appareil d'analyse de température de gaz d'échappement (1) qui est conçu pour faire correspondre le spectre mesuré d'un gaz mesuré à tous les spectres théoriques définis pour une série de températures (TA à TB) et de pressions (P1, P2, P3, P4), dans lequel la température du gaz mesuré est définie comme étant celle du spectre théorique qui correspond le plus étroitement au spectre mesuré, dans lequel le spectre mesuré et le spectre théorique sont déduits d'une lumière laser absorbée dans le gaz d'échappement, et dans lequel une lumière laser qui est rayonnée vers le gaz d'échappement est une lumière laser infrarouge, l'appareil étant **caractérisé en ce qu'**il comprend :
un premier dispositif qui est conçu pour faire correspondre un spectre mesuré à une partie des spectres théoriques, définis en association avec une première plage de température (TC à TD) ayant une température déterminée dans l'analyse de température immédiatement précédente en tant que référence ; et
un deuxième dispositif qui est conçu pour faire correspondre le spectre mesuré à tous les spectres théoriques définis dans une deuxième plage de température (TE à TF) qui est plus étroite que la première plage de température (TC à TD), pour déterminer une température calculée (Tβ).

5. Appareil d'analyse de température de gaz d'échappement selon la revendication 4, **caractérisé en ce qu'**il comprend en outre :
un dispositif correction de calcul discrète qui applique une correction de calcul discrète à la température calculée (Tβ) par rapport à une différence de pression (Δp) lorsqu'il y a une différence entre la pression dans un spectre théorique référencé lors de la mise en correspondance et la pression mesurée, pour déterminer une température corrigée (Tγ).

6. Appareil d'analyse de température de gaz d'échappement selon l'une ou l'autre de la revendication 4 ou de la revendication 5, dans lequel la température déterminée dans l'analyse de température immédiatement précédente est l'une d'une température approximative (Tα) déterminée dans l'analyse de température immédiatement précédente, d'une température calculée (Tβ) déterminée dans l'analyse de température immédiatement précédente, ou d'une température corrigée (Tγ) déterminée dans l'analyse de température immédiatement précédente.

7. Support de mémorisation pouvant être lu par un ordinateur qui mémorise un programme d'analyse de température de gaz d'échappement pouvant être exécuté par un ordinateur pour faire correspondre un spectre mesuré d'un gaz mesuré à des spectres théoriques qui sont prédéfinis pour une série de températures (TA à TB) et de pressions (P1, P2, P3, P4), dans lequel la température du gaz mesuré est définie comme étant celle du spectre théorique qui correspond le plus étroitement
au spectre mesuré, dans lequel le spectre mesuré et le spectre théorique sont déduits d'une lumière laser absorbée dans le gaz d'échappement, et dans lequel une lumière laser qui est rayonnée vers le gaz d'échappement est une lumière laser infrarouge, le programme étant **caractérisé en ce qu'**il comprend des instructions pour :
calculer une température approximative (Tα) au moins une fois en faisant correspondre le spectre mesuré à une partie des spectres théoriques définis en association avec une première plage de température (TC à TD) en utilisant une température, déterminée dans l'analyse de température immédiatement précédente, en tant que référence, et
déterminer une température calculée (Tβ) en faisant correspondre le spectre mesuré à tous les spectres théoriques définis en association avec une deuxième plage de température (TE à TF) qui est plus étroite que la première plage de température (TC à TD), en utilisant la température approximative (Tα) en tant que référence.

8. Support de mémorisation pouvant être lu par un ordinateur selon la revendication 7, qui mémorise un programme d'analyse de température de gaz d'échappement, le programme étant **caractérisé en ce qu'**il comprend en outre des instructions pour :
appliquer une correction de calcul discrète à la température calculée (Tβ) par rapport à une différence de pression (Δp) lorsqu'il y a une différence entre la pression dans un spectre théorique référencé lors de la mise en correspondance et la pression mesurée du gaz mesuré pour déterminer une température corrigée (Tγ).

9. Support de mémorisation pouvant être lu par un ordinateur selon la revendication 7 ou la revendication 8, qui
mémorise un programme d'analyse de température de gaz d'échappement, dans lequel la température déterminée dans l'analyse de température immédiatement précédente est l'une d'une température approximative (Tα) déterminée dans l'analyse de température immédiatement précédente, d'une température calculée (Tβ) déterminée dans l'analyse de température immédiatement précédente, ou d'une température corrigée (Tγ) déterminée dans l'analyse de température immédiatement précédente.
